# EUROPÄISCHE PATENTSCHRIFT

(11) **EP 2 288 515 B1**
(45) Veröffentlichungstag und Bekanntmachung des Hinweises auf die Patenterteilung: **23.03.2016**
(21) Anmeldenummer: 09753624.7
(22) Anmeldetag: 15.05.2009
(51) Int. Cl.: B60R 7/06, B60R 11/00, B60N 3/10

(54) **ABLAGEFACH IN EINEM FAHRZEUG, INSBESONDERE IN EINER INSTRUMENTENTAFEL EINES FAHRZEUGS**
STORAGE COMPARTMENT IN A VEHICLE, PARTICULARLY IN A DASHBOARD OF A VEHICLE
COMPARTIMENT DE RANGEMENT DANS UN VÉHICULE, EN PARTICULIER DANS LE TABLEAU DE BORD D'UN VÉHICULE

(30) Priorität: 31.05.2008 DE 102008026359
(43) Veröffentlichungstag der Anmeldung: 02.03.2011
(73) Patentinhaber: Volkswagen Aktiengesellschaft, 38440 Wolfsburg (DE)
(72) Erfinder: STRUBE, Christian, 38518 Gifhorn (DE); STEINMANN, Boris, 38350 Helmstedt (DE); REHMKE, Thomas, 29392 Wesendorf (DE); AZARIAN, Robin, 38442 Wolfsburg (DE); FREVERT, Martin, 29389 Bad Bodenteich (DE)
(86) Internationale Anmeldenummer: PCT/EP2009/003492
(87) Internationale Veröffentlichungsnummer: WO 2009/143969

(56) Entgegenhaltungen:
- EP-A- 0 668 189
- EP-A- 1 193 129
- DE-A1-102005 057 215
- DE-C1- 4 006 487
- FR-A- 2 793 743
- JP-A- 9 325 710
- JP-A- 10 333 596
- JP-U- 63 168 141
- US-A- 4 099 814
- US-A1- 2007 138 822

## Beschreibung

Die Erfindung betrifft ein Ablagefach in einem Fahrzeug, insbesondere in einer Instrumententafel eines Fahrzeugs, nach dem Oberbegriff des Anspruchs 1.

Aus der Druckschrift WO 01/23211 A1 ist ein Ablagefach in einer Instrumententafel eines Fahrzeugs bekannt mit zwei übereinander liegenden Stauräumen, die jeweils durch eine zugeordnete von Hand öffen- und schließbare Stauraumklappe abgedeckt sind. Die zwei übereinander liegenden Stauräume sind durch eine feste Zwischenwand voneinander getrennt. Im Bereich des oberen Stauraums kann ein Trinkgefäß-Halter in eine Funktionsstellung geklappt werden.

Weiter ist aus der Druckschrift DE 195 43 925 C1 ein multifunktionales Servicefach für Fahrzeuge bekannt, wobei ein Aufnahmegehäuse mit einer ausschwenkbaren Abdeckklappe vorgesehen ist. Die Abdeckklappe ist so ausgebildet, dass dort wahlweise ein Trinkgefäß-Halter oder ein Aschenbecher austauschbar angebracht werden können.

Aus der Druckschrift EP 1 681 205 A1 ist ein Handschuhkasten für ein Kraftfahrzeug mit einem innerhalb des Handschuhkastens angeordneten Fachboden bekannt.

Aus der FR-A-2 793 743 ist ein gattungsgemäßes Ablagefach bekannt.

Aufgabe der Erfindung ist es, ein gattungsgemäßes Ablagefach in einem Fahrzeug zu verbessern.

Diese Aufgabe wird mit den Merkmalen des Anspruchs 1 gelöst.

Gemäß Anspruch 1 ist zwischen den zwei übereinander liegenden Stauräumen eine klappbare Trennwand angebracht, die von einer weggeklappten Nichtgebrauchsstellung, in der die beiden Stauräume einen gemeinsamen Großstauraum bilden, in eine Gebrauchsstellung klappbar ist, in der die beiden Stauräume voneinander getrennt sind. Damit ist vorteilhaft der gesamte Stauraum der beiden Stauräume als gemeinsame Großstauraum nutzbar ebenso wie die beiden durch die Trennwand abgetrennten Stauräume auch einzeln bei Bedarf nutzbar sind. Durch diese variable Nutzungsmöglichkeit kann somit der Stauraum an unterschiedliche Dimensionen von zu stauenden Gegenständen angepasst werden.

Weiterhin ist durch die im Anspruch 1 definierte Überlappung der freien zugeordneten Ränder der oberen Stauraumklappe und der unteren Stauraumklappe in der Schließstellung dort für einen davor sitzenden oder stehenden Fahrgast keine störende Fuge zwischen den beiden Klappen sichtbar.

In einer konkreten vorteilhaften Ausbildung ist die Klappachse für die Trennwand an einer rückseitigen Ablagefachwand horizontal verlaufend angeordnet und von einer nach oben an die rückseitige Ablagefachwand geklappten Nichtgebrauchsstellung in eine horizontale Gebrauchsstellung als Trennwand klappbar. Zweckmäßig wird dabei die Trennwand mit ihrem freien Trennwandrand auf eine ortsfeste Auflageschulter geklappt und dort abgestützt und gegebenenfalls zusätzlich dort festgelegt (zum Beispiel durch eine Rast- oder Klemmeinrichtung). Die Trennwand bildet dann in der Gebrauchsstellung einen stabilen Boden des oberen Stauraums und entsprechend die Oberwand des unteren Stauraums.

In der Trennwand können eine oder mehrere Mulden zum Abstellen und Halten eines Trinkgefäßes in der Gebrauchsstellung eingeformt sein. Vorteilhaft kann der oder den Mulden ein Trinkgefäß-Halter (Cupholder) zugeordnet sein, der in den Bereich des oberen Stauraums klappbar ist.

In einer wenig Bauraum beanspruchenden und funktionsfähigen Ausführung ist der Trinkgefäß-Halter gabelförmig oder ringförmig ausgebildet, wobei dessen Klappachse an einer rückseitigen Ablagefachwand horizontal verlaufend oberhalb der Trennwand-Klappachse angebracht ist. Der Trinkgefäß-Halter wird dann von einer nach oben an die rückseitige Ablagefachwand geklappten Nichtgebrauchsstellung in eine horizontale Gebrauchsstellung im oberen Stauraum geklappt. In den Nichtgebrauchsstellungen sowohl des Trinkgefäß-Halters als auch der Trennwand werden diese raumsparend an die rückseitigen Ablagefachwand übereinander liegend geklappt.

Um einen sicheren klapperfreien Halt in der Nichtgebrauchsstellung und/oder der Gebrauchsstellung der Trennwand und/oder des Trinkgefäß-Halters zu gewährleisten, können den einzelnen Stellungen zugeordnete Rastelemente für eine Positionsverrastung vorgesehen sein.

Für eine gute Zugänglichkeit ist die obere Stauraumklappe als Abdeckung des oberen Stauraums zweckmäßig an einer rückseitig im oberen Ablagefachwandbereich angebrachten, horizontal verlaufenden oberen Klappenachse angelenkt und nach oben aufklappbar. Dabei ist die obere Stauraumklappe gewölbt und bildet in der Schließstellung einen oberen zum Fahrgastraum weisenden Bereich einer Instrumententafel. Bei dieser Anordnung und Ausführung kann der obere Stauraum bequem von oben her, insbesondere für das Abstellen und Entnehmen von Trinkgefäßen benutzt werden.

Entsprechend ist die untere Stauraumklappe an einer im unteren Ablagefachwandbereich angeordneten horizontal verlaufenden unteren Klappenachse angelenkt und nach unten aufklappbar. Die untere Stauraumklappe kann etwas gewölbt sein und bildet einen etwa vertikalen Bereich der Instrumententafel in der Knieregion eines Beifahrers.

Zweckmäßig ist der untere Stauraum in der Art eines üblichen Handschuhfachs größer im Vergleich zum oberen Stauraum dimensioniert, so dass der von oben zugängliche Stauraum vorzugsweise für kleinere Gegenstände und/oder Trinkgefäße zu verwenden ist.

Je nach den Gegebenheiten kann zudem unterhalb des unteren Stauraums ein dritter Stauraum angeordnet sein, der über eine zugeordnete dritte Stauraumklappe vom unteren Stauraum aus zugänglich ist. Diese dritte Stauraumklappe ist an einer im rückwärtigen Bereich des unteren Stauraums angebrachten dritten Stauraumachse angelenkt und kann von einer waagrechten Schließstellung, in der sie ein Bodenteil des zweiten Stauraums ist, in eine Offenstellung hochgeklappt werden. Der dritte Stauraum kann vorzugsweise in der Form einer flachen Kassette ausgebildet sein und sich sowohl unterhalb des unteren Stauraums als auch noch weiter in Fahrtrichtung des Fahrzeugs erstrecken. Eine solche flache Kassette kann insbesondere für die Unterbringung von weniger oft genutzten Fahrzeugpapieren, Beschreibungen etc. verwendet werden.

Für das Konzept variabel nutzbarer Ablagefächer wird zudem vorgeschlagen, im Bereich der mittleren Oberseite einer Instrumententafel eine Aufnahmemulde anzubringen mit einer von Hand offenbaren und schließbaren Abdeckklappe, die zum Fahrgastraum hin öffnet. In der Mulde ist ein schwenkbarer Gerätehalter angebracht, wobei die Schwenkachse horizontal an der zum Fahrgastraum liegenden Muldenwand angeordnet ist. Der Gerätehalter und die Schwenkachse sind so angeordnet und dimensioniert, dass ein im Gerätehalter eingesetztes elektronisches Gerät in der eingeschwenkten Position in der Aufnahmemulde mit einem nach oben weisenden Anzeigedisplay aufgenommen ist und in der ausgeschwenkten Position mit dem etwa vertikal stehenden Anzeigedisplay über den Muldenrand ragt und zum Fahrgastraum hin gerichtet ist. Die Abdeckklappe und der Gerätehalter weisen zudem an ihren freien Rändern zugeordnete Rastmittel auf, die in einer gegenüber der völligen Öffenstellung der Abdeckklappe in Schließrichtung liegenden Raststellung für eine Lagesicherung des elektronischen Geräts ineinander greifen.

Bei dem elektronischen Gerät kann es sich insbesondere um ein Navigationsgerät mit einem Bildschirm als Anzeigedisplay handeln. Damit wird ein einfach herstellbarer und funktionssicherer Navigationsgerät-Halter mit einer Aufnahmemulde für tragbare mobile Navigationsgeräte zur Verfügung gestellt, welche bisher nur unbefriedigend, beispielsweise mit Saugnapfhaltern an der Windschutzscheibe, befestigt worden sind. Der Gerätehalter kann aber auch beispielsweise bei mobilen Kleincomputern (sogenannten Personal Digital Assistants oder Smartphones) vorteilhaft eingesetzt werden.

Anhand einer Zeichnung wird die Erfindung näher erläutert. Es zeigen:
- Fig. 1: einen Schnitt durch eine Instrumententafel eines Kraftfahrzeugs mit einem Ablagefach mit drei variabel nutzbaren Stauräumen;
- Fig. 2: das Ablagefach nach Fig. 1 mit einer Nutzung des oberen Stauraums zur Aufnahme eines Trinkgefäßes;
- Fig. 3: das Ablagefach nach Fig. 1 mit einer gemeinsamen Nutzung des oberen und unteren Stauraums zur Aufnahme einer Getränkeflasche;
- Fig. 4: einen Schnitt durch eine Instrumententafel eines Kraftfahrzeugs an deren Oberseite mit einer Aufnahmemulde mit einer Abdeckklappe, im geschlossenen Zustand;
- Fig. 5: die Instrumententafel der Fig. 4, mit geöffneter Abdeckklappe.

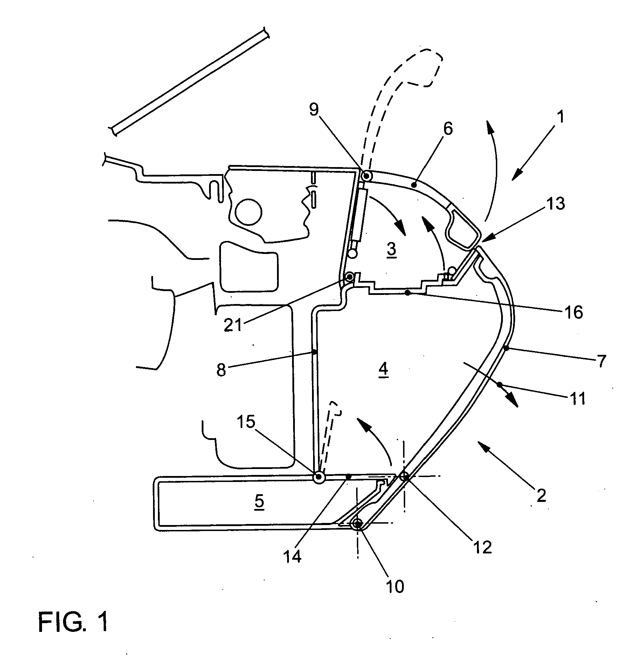

In Fig. 1 ist ein Schnitt durch eine Instrumententafel 1 im Bereich eines Beifahrersitzes dargestellt mit einem Ablagefach 2. Das Ablagefach 2 besteht aus einem oberen Stauraum 3 und einem unteren Stauraum 4 sowie einem dritten Stauraum in der Art einer flachen Stauraumkassette 5 unterhalb des unteren Stauraums 4. Der obere Stauraum 3 und der untere Stauraum 4 sind jeweils durch eine zugeordnete obere Stauraumklappe 6 und untere Stauraumklappe 7 abgedeckt, die von Hand öffen- und schließbar sind.

Die obere Stauraumklappe 3 ist an einer rückseitig in einem oberen Bereich einer hinteren Ablagefachwand 8 angeordneten, horizontal verlaufenden oberen Klappenachse 9 angelenkt und ist nach oben (strichliert eingezeichnet) aufklappbar. Die obere Stauraumklappe 6 ist gewölbt und bildet in der Schließstellung einen oberen zum Fahrgastraum weisenden Bereich der Instrumententafel 1.

Die untere Stauraumklappe 7 ist an einer im unteren Bereich des Ablagefachs angeordneten horizontal verlaufenden unteren Klappenachse 10 angelenkt und nach unten aufklappbar, wie dies mit dem Pfeil 11 angedeutet ist. Konkret liegt hier die untere Klappenachse 10 an der vorderen unteren Kante der Stauraumkassette 5. Alternativ könnte die untere Klappenachse 10 auch an der Stelle 12 entsprechend der oberen Vorderkante der Stauraumkassette 5 angeordnet sein.

Wie aus Fig. 1 ersichtlich, ist der untere Stauraum 4 größer im Vergleich zum oberen Stauraum 3 dimensioniert. In den Schließstellungen der beiden Klappen 6, 7 überlappt die untere Stauraumklappe 7 mit ihrem freien Rand einen Teil des freien Randes der oberen Stauraumklappe 6, so dass für einen Fahrzeuginsassen aus dessen Sichtwinkel eine Fuge 13 nicht sichtbar ist.

Die unterste Stauraumkassette 5 bildet mit ihrer Kassettenklappe 14 in deren geschlossenem Zustand den Boden des unteren Stauraums 4, wobei sich die Stauraumkassette ersichtlich noch weiter in Fahrtrichtung erstreckt. Die Kassettenklappe ist im unteren Teil der hinteren Ablagefachwand 8 an einer horizontalen Klappenachse 15 angelenkt und von einer waagrechten Schließstellung nach oben in eine Offenstellung klappbar (strichliert eingezeichnet).

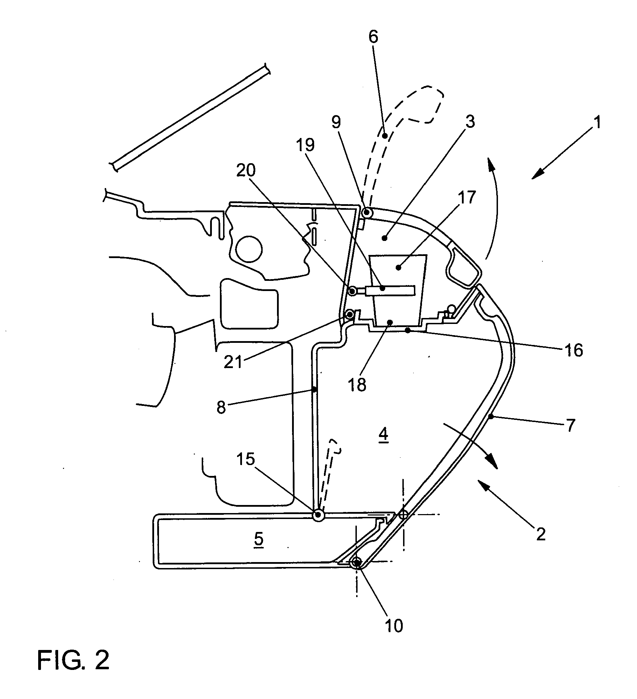

Der obere Stauraum 3 und der unter Stauraum 4 sind durch eine klappbare Trennwand 16 getrennt. In der in Fig. 1 und in Fig. 2 eingezeichneten horizontalen Klappstellung der Trennwand 16 bildet diese den Boden des oberen Stauraums 3 bzw. die Oberwand des unteren Stauraums 4. In dieser Position der Trennwand 16 können ersichtlich der untere Stauraum 4 und der obere Stauraum 5 unabhängig voneinander genutzt werden. Dazu ist in Fig. 2 die Nutzung des oberen Stauraums 3 zur Aufnahme und Halterung eines Trinkgefäßes 17 gezeigt. Das Einstellen und die Entnahme des Trinkgefäßes 17 erfolgt bei geöffneter oberer Stauraumklappe 6 von oben her. Für einen sicheren Halt des Trinkgefäßes 17 ist einerseits in der Trennwand 16 eine Mulde 18 entsprechend der Bodenform des Trinkgefäßes 17 eingeformt. Zudem ist ein klappbarer, gabelförmiger Trinkgefäßhalter 19 an einer zugeordneten Klappachse 20 angelenkt, der von einer (in Fig. 1 gezeigten) nach oben geklappten Nichtgebrauchsstellung in die in Fig. 2 dargestellte waagrechte Funktionsstellung klappbar ist. Die Klappachse 20 für den Trinkgefäß-Halter 19 liegt dabei oberhalb der Trennwandklappachse 21.

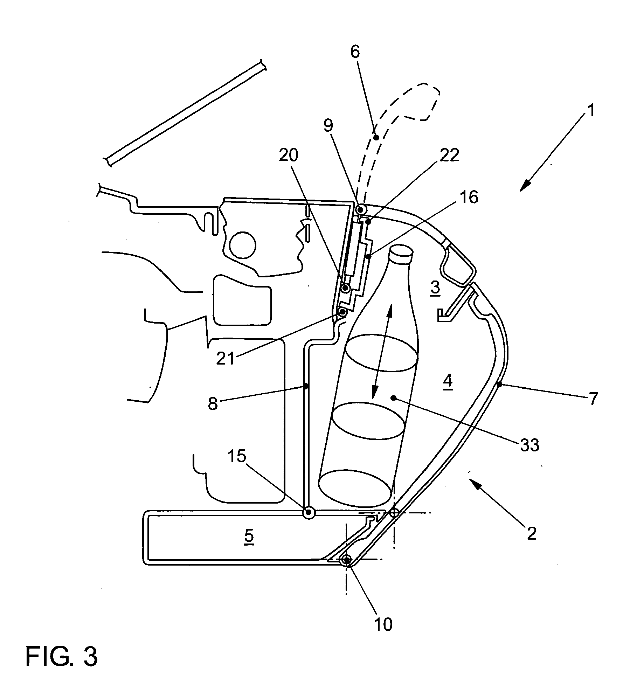

Für eine gemeinsame Nutzung sowohl des oberen Stauraums 3 als auch des unteren Stauraums 4 in der Art eines Großstauraums kann die Trennwand 16, wie in Fig. 3 dargestellt, bei hochgeklapptem Trinkgefäß-Halter 19 ebenfalls auf diesem liegend nach oben geklappt werden. Dadurch wird eine große Öffnung entsprechend der Ausdehnung der Trennwand 16 zwischen dem unteren Stauraum 4 und dem oberen Stauraum 3 hergestellt. Wie in Fig. 3 dargestellt, können der obere Stauraum 3, der untere Stauraum 4 und die Trennwand 16 bzw. die freigegebene Öffnung so dimensioniert werden, dass eine Getränkeflasche 33 bei geöffneter oberer Stauraumklappe 6 bequem in den geschaffenen Großstauraum eingesteckt und sicher transportiert werden kann.
Für einen sicheren Halt des Trinkgefäß-Halters 19 und/oder der Trennwand 16 in der nach oben geklappten Nichtgebrauchsstellung und gegebenenfalls auch in der jeweils waagrechten Gebrauchsstellung können zugeordnete Rastelemente vorgesehen sein, wovon beispielhaft an der Stelle 22 eine solche Rastverbindung schematisch dargestellt ist.

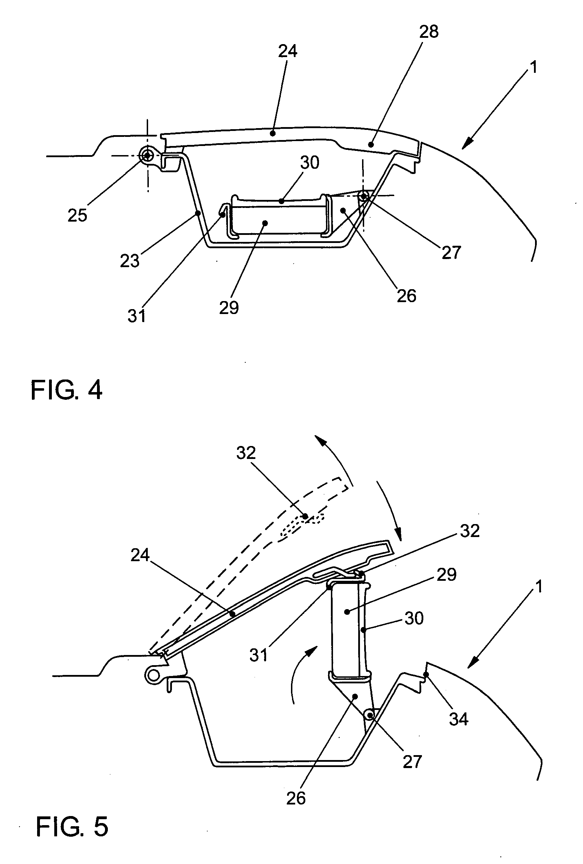

Auch in den. Fig. 4 und 5 ist ein Schnitt durch eine Instrumententafel 1 gezeigt, jedoch an deren mittlerer Oberseite, wo eine Aufnahmemulde 23 angebracht ist mit einer von Hand offenbaren und schließbaren Abdeckklappe 24, die an einer Klappenachse 25 angelenkt ist und die zum Fahrgastraum hin öffnet.

In der Mulde 23 ist ein schwenkbarer Navigationsgerät-Halter 26 an einer Schwenkachse 27 schwenkbar gelagert. Die Schwenkachse 27 liegt gegenüber der Klappenachse 25, etwa im Bereich unter dem freien Abdeckklappenrand 28. Im Navigationsgerät-Halter 26 ist ein mobiles Navigationsgerät 29 eingesetzt, das mit seinem Bildschirm 30 in der in Fig. 4 dargestellten eingeschwenkte Position nach oben zeigt und mit der geschlossenen Abdeckklappe 24 abgedeckt werden kann.

Wie aus Fig. 5 ersichtlich, ist die Lage der Schwenkachse 27 in Verbindung mit der weiteren Geometrie des Navigationsgeräte-Halters 26 so ausgeführt, dass das Navigationsgerät 29 in der ausgeschwenkten Position mit dem dann etwa vertikal stehenden Bildschirm 30 über den Muldenrand 34 ragt.

Die Abdeckklappe 24 und der Navigationsgerät-Halter 26 haben jeweils an ihren freien Enden angeordnete Rastmittel 31, 32, wobei diese in der in Fig. 5 dargestellten Position der Abdeckklappe 24 für eine Halterung des Navigationsgerätehalters 26 ineinandergreifen, nachdem die Abdeckklappe 24 von der völligen Offenstellung (strichliert eingezeichnet) wieder teilweise in Schließrichtung geschwenkt wurde. Damit werden der Navigationsgerät-Halter 26 und damit das Navigationsgerät 29 sicher und klapperfrei in seiner aufgeschwenkten Funktionsstellung gehalten.

**Bezugszeichenliste**

| | | | |
|---|---|---|---|
| 1 | Instrumententafel | 31 | Rastmittel |
| 2 | Ablagefach | 32 | Rastmittel |
| 3 | oberer Stauraum | 33 | Getränkeflasche |
| 4 | unterer Stauraum | | |
| 5 | Stauraum-Kassette | | |
| 6 | obere Stauraumklappe | | |
| 7 | untere Stauraumklappe | | |
| 8 | hintere Ablagefachwand | | |
| 9 | obere Klappenachse | | |
| 10 | untere Klappenachse | | |
| 11 | Pfeil | | |
| 12 | Stelle | | |
| 13 | Fuge | | |
| 14 | Kassettenklappe | | |
| 15 | dritte Klappenachse | | |
| 16 | Trennwand | | |
| 17 | Trinkgefäß | | |
| 18 | Mulde | | |
| 19 | Trinkgefäßhalter | | |
| 20 | Klappenachse | | |
| 21 | Klappachse | | |
| 22 | Stelle für Rastelement | | |
| 23 | Aufnahmemulde | | |
| 24 | Abdeckklappe | | |
| 25 | Kappenachse | | |
| 26 | Gerätehälter, insbesondere Navigationsgeräthalter | | |
| 27 | Schwenkachse | | |
| 28 | Abdeckklappenrand | | |
| 29 | elektronisches Gerät, insbesondere Navigationsgerät | | |
| 30 | Anzeigedisplay, insbesondere Bildschirm | | |

## Patentansprüche

1. Ablagefach in einem Fahrzeug, insbesondere in einer Instrumententafel eines Fahrzeugs, mit zwei übereinanderliegenden Stauräumen (3, 4), die jeweils durch eine zugeordnete, von Hand öffen- und schließbare Stauraumklappe (6, 7) abgedeckt sind, wobei zwischen den zwei Stauräumen (3, 4) eine klappbare Trennwand (16) angebracht ist, die von einer weggeklappten Nichtgebrauchsstellung, in der die beiden Stauräume (3, 4) einen gemeinsamen Großstauraum bilden, in eine Gebrauchsstellung klappbar ist, in der die beiden Stauräume (3, 4) voneinander getrennt sind, **dadurch gekennzeichnet, dass** von den einander zugewandten freien Rändern der oberen und unteren Stauraumklappen (6, 7) der freie Rand.der unteren Stauraumklappe (7) in der Schließstellung einen Teil des freien Randes der oberen Stauraumklappe (6) überlappt, so dass für den Fahrzeuginsassen keine störende Fuge (13) zwischen beiden Stauraumklappen (6, 7) sichtbar ist.

2. Ablagefach nach Anspruch 1, **dadurch gekennzeichnet, dass** die Klappachse (21) für die Trennwand (16) an einer rückseitigen Ablagefachwand (8) horizontal verlaufend angeordnet ist, und die Trennwand (16) von einer nach oben an die rückseitige Ablagefachwand (8) aus dem oberen Stauraum (3) geklappten Nichtsgebrauchsstellung in eine horizontale Gebrauchsstellung klappbar ist, dergestalt, dass die Trennwand (16) in der Gebrauchsstellung den Boden des oberen Stauraums (3) und entsprechend die Oberwand des unteren Stauraum (4) bildet.

3. Ablagefach nach Anspruch 1 oder 2, **dadurch gekennzeichnet, dass** die Trennwand (16) wenigstens eine Mulde (18) zum Abstellen eines Trinkgefäßes (17) aufweist.

4. Ablagefach nach einem der Ansprüche 1 bis 3, **dadurch gekennzeichnet, dass** in den Bereich des Stauraums (3) ein Trinkgefäß-Halter (19) klappbar ist.

5. Ablagefach nach Anspruch 4 in Verbindung mit Anspruch 2, **dadurch gekennzeichnet, dass** der Trinkgefäß-Halter (19) gabelförmig oder ringförmig ausgebildet ist und dessen Klappachse (20) an einer rückseitigen Ablagefachwand (8) horizontal verlaufend oberhalb der Trennwand-Klappachse (21) angebracht ist, und der Trinkgefäß-Halter (19) von einer nach oben an die rückseitige Ablagefachwand (8) geklappten Nichtgebrauchsstellung in eine horizontale Gebrauchsstellung im oberen Stauraum (3) klappbar ist.

6. Ablagefach nach Anspruch 5, **dadurch gekennzeichnet, dass** in den Nichtgebrauchsstellungen die Trennwand (16) auf den Trinkgefäß-Halter (19) geklappt ist.

7. Ablagefach nach einem der Ansprüche 2 bis 6, **dadurch gekennzeichnet, dass** die Trennwand (16) und/oder der Trinkgefäß-Halter (19) in der Nichtgebrauchsstellung und/oder Gebrauchsstellung durch Rastelemente (22) gehalten sind.

8. Ablagefach nach einem der Ansprüche 1 bis 7, **dadurch gekennzeichnet, dass** die obere Stauraumklappe (6) an einer rückseitigen, in einem oberen Bereich einer hinteren Ablagefachwand (8) angeordneten, horizontal verlaufenden oberen Klappenachse (9) angelenkt und nach oben aufklappbar ist, und dass die obere Stauraumklappe (6) gewölbt ist und in der Schließstellung einen oberen zum Fahrgastraum weisenden Bereich der Instrumententafel (1) bildet.

9. Ablagefach nach einem der Ansprüche 1 bis 8, **dadurch gekennzeichnet, dass** die untere Stauraumklappe (7) an einer im unteren Bereich des Ablagefachs (2) angeordneten, horizontal verlaufenden unteren Klappenachse (10, 12) angelenkt und nach unten aufklappbar ist, und dass die untere Stauraumklappe (7) gewölbt ist und einen etwa vertikalen Bereich der Instrumententafel (1) bildet.

10. Ablagefach nach einem der Ansprüche 1 bis 9, **dadurch gekennzeichnet, dass** der untere Stauraum (4) größer im Vergleich zum oberen Stauraum (3) ausgebildet ist.

11. Ablagefach nach einem der Ansprüche 1 bis 10, **dadurch gekennzeichnet, dass** unterhalb des unteren Stauraums (4) ein dritter Stauraum (5) angeordnet ist, der über eine zugeordnete dritte Stauraumklappe (14) vom unteren Stauraum (4) aus zugänglich ist, wobei die dritte Stauraumklappe (14) an einer im rückwärtigen Bereich des unteren Stauraums (4) angeordneten dritten Klappenachse (15) angelenkt und von einer waagrechten Schließstellung in eine Offenstellung hochklappbar ist.

12. Ablagefach nach Anspruch 11, **dadurch gekennzeichnet, dass** der dritte Stauraum in der Form einer flachen Stauraum-Kassette (5) ausgebildet ist und sich sowohl unterhalb des unteren Stauraums (4) als auch noch weiter in Fahrtrichtung des Fahrzeugs erstreckt.

13. Ablagefach nach einem der Ansprüche bis 12, **dadurch gekennzeichnet,**
- **dass** im Bereich der mittleren Oberseite der Instrumententafel (1) eine Aufnahmemulde (23) angebracht ist mit einer von Hand öffenbaren und schließbaren Abdeckklappe (24), die zum Fahrgastraum hin öffnet,
- **dass** in der Aufnahmemulde (23) ein schwenkbarer Gerätehalter (26) angebracht ist, wobei die Schwenkachse (27) horizontal an der zum Fahrgastraum liegenden Muldenwand angeordnet ist,
- **dass** der Gerätehalter (26) und dessen Schwenkachse (27) so ausgebildet und angeordnet sind, dass ein in den Gerätehalter eingesetztes elektronisches Gerät (29) in der eingeschwenkten Position in der Aufnahmemulde, (23) mit einem nach oben weisenden Anzeigedisplay (30) aufgenommen ist und in der ausgeschwenkten Position mit dem dann etwa vertikalen Anzeigedisplay (30) über den Muldenrand (34) ragt, und
- **dass** die Abdeckklappe (24) und der Gerätehalter (26) an ihren freien Rändern angeordnete Rastmittel (31, 32) aufweisen, die in einer gegenüber der völligen Offenstellung der Abdeckklappe (24) in Schließrichtung liegenden Raststellung für eine Lagesicherung des elektronischen Geräts (29) ineinander greifen.

## Claims

1. Storage compartment in a vehicle, in particular in a dashboard of a vehicle, with two storage spaces (3, 4) which are located one above the other and are respectively covered by an associated, manually openable and closeable storage space flap (6, 7), wherein a foldable partition (16) is provided between the two storage spaces (3, 4), said partition being foldable from a folded-away not-in-use position, in which the two storage spaces (3, 4) form a common large storage space, into a use position, in which the two storage spaces (3, 4) are separated from each other, **characterized in that**, of the mutually facing, free edges of the upper and lower storage space flaps (6, 7), the free edge of the lower storage space flap (7) in the closed position overlaps part of the free edge of the upper storage space flap (6) such that no annoying gap (13) between the two storage space flaps (6, 7) is visible to the vehicle occupant.

2. Storage compartment according to Claim 1, **characterized in that** the folding axis (21) for the partition (16) is arranged in a horizontally running manner on a rear storage compartment wall (8), and the partition (16) can be folded from a not-in-use position, in which said partition is folded out of the upper storage space (3) upwards onto the rear storage compartment wall (8), into a horizontal use position in such a manner that, in the use position, the partition (16) forms the base of the upper storage space (3) and accordingly the upper wall of the lower storage space (4).

3. Storage compartment according to Claim 1 or 2, **characterized in that** the partition (16) has at least one trough (18) for the depositing of a beverage vessel (17).

4. Storage compartment according to one of Claims 1 to 3, **characterized in that** a beverage vessel holder (19) can be folded into the region of the storage space (3).

5. Storage compartment according to Claim 4 in conjunction with Claim 2, **characterized in that** the beverage vessel holder (19) is of fork-shaped or annular design and the folding axis (20) thereof is provided on a rear storage compartment wall (8) in a manner running horizontally above the partition folding axis (21), and the beverage vessel holder (19) can be folded from a not-in-use position, in which said beverage vessel holder is folded upwards onto the rear storage compartment wall (8), into a horizontal use position in the upper storage space (3).

6. Storage compartment according to Claim 5, **characterized in that**, in the not-in-use positions, the partition (16) is folded onto the beverage vessel holder (19).

7. Storage compartment according to one of Claims 2 to 6, **characterized in that** the partition (16) and/or the beverage vessel holder (19) are held in the not-in-use position and/or use position by latching elements (22).

8. Storage compartment according to one of Claims 1 to 7, **characterized in that** the upper storage space flap (6) is articulated and can be opened upwards on a rear, horizontally running, upper flap axis (9) arranged in an upper region of a rear storage compartment wall (8), and **in that** the upper storage space flap (6) is curved and, in the closed position, forms an upper region of the dashboard (1), which region faces the passenger compartment.

9. Storage compartment according to one of Claims 1 to 8, **characterized in that** the lower storage space flap (7) is articulated and can be opened downwards on a horizontally running, lower flap axis (10, 12) arranged in the lower region of the storage compartment (2), and **in that** the lower storage space flap (7) is curved and forms an approximately vertical region of the dashboard (1).

10. Storage compartment according to one of Claims 1 to 9, **characterized in that** the lower storage space (4) is designed to be larger than the upper storage space (3).

11. Storage compartment according to one of Claims 1 to 10, **characterized in that** a third storage space (5) is arranged below the lower storage space (4), said third storage space being accessible from the lower storage space (4) via an associated third storage space flap (14), wherein the third storage space flap (14) is articulated on a third flap axis (15) arranged in the rear region of the lower storage space (4), and can be folded upwards from a horizontal closed position into an open position.

12. Storage compartment according to Claim 11, **characterized in that** the third storage space is designed in the form of a flat storage space cassette (5) and extends both below the lower storage space (4) and also further in the direction of travel of the vehicle.

13. Storage compartment according to one of Claims 1 to 12, **characterized**
- **in that** a receiving trough (23) with a manually openable and closeable covering flap (24) which opens towards the passenger compartment is provided in the region of the central upper side of the dashboard (1),
- **in that** a pivotable device holder (26) is provided in the receiving trough (23), wherein the pivot axis (27) is arranged horizontally on the trough wall situated towards the passenger compartment,
- **in that** the device holder (26) and the pivot axis (27) thereof are designed and arranged in such a manner that an electronic device (29) inserted into the device holder is accommodated, in the pivoted-in position, in the receiving trough (23) with an indicating display (30) pointing upwards and, in the pivoted-out position, projects with the indicating display (30), which is then approximately vertical, over the trough edge (34), and
- **in that** the covering flap (24) and the device holder (26) have latching means (31, 32) which are arranged on the free edges of said covering flap and device holder and, in a latching position lying in the closing direction in comparison to the complete open position of the covering flap (24), grip in one another to positionally secure the electronic device (29).

## Revendications

1. Compartiment de rangement dans un véhicule, en particulier dans un tableau de bord d'un véhicule, comprenant deux espaces de rangement (3, 4) l'un au-dessus de l'autre, qui sont recouverts chacun par un volet d'espace de rangement (6, 7) associé, pouvant être ouvert et fermé manuellement, une paroi de séparation rabattable (16) étant montée entre les deux espaces de rangement (3, 4), laquelle peut être pivotée depuis une position de non-utilisation rabattue, dans laquelle les deux espaces de rangement (3, 4) forment un grand espace de rangement commun, dans une position d'utilisation dans laquelle les deux espaces de rangement (3, 4) sont séparés l'un de l'autre, **caractérisé en ce que**, parmi les bords libres tournés l'un vers l'autre des volets d'espace de rangement supérieur et inférieur (6, 7), le bord libre du volet d'espace de rangement inférieur (7), dans la position de fermeture, chevauche une partie du bord libre du volet d'espace de rangement supérieur (6), de telle sorte qu'aucun joint gênant (13) entre les deux volets d'espace de rangement (6, 7) ne soit visible par les occupants du véhicule.

2. Compartiment de rangement selon la revendication 1, **caractérisé en ce que** l'axe de pivotement (21) pour la paroi de séparation (16) est disposé de manière à s'étendre horizontalement au niveau d'une paroi arrière (8) du compartiment de rangement, et la paroi de séparation (16) peut être pivotée d'une position de non-utilisation pivotée vers le haut contre la paroi arrière (8) du compartiment de rangement depuis l'espace de rangement supérieur (3) dans une position d'utilisation horizontale, de telle sorte que la paroi de séparation (16), dans la position d'utilisation, forme le fond de l'espace de rangement supérieur (3), et par conséquent la paroi supérieure de l'espace de rangement inférieur (4).

3. Compartiment de rangement selon la revendication 1 ou 2, **caractérisé en ce que** la paroi de séparation (16) présente au moins un creux (18) pour déposer un récipient pour boissons (17).

4. Compartiment de rangement selon l'une quelconque des revendications 1 à 3, **caractérisé en ce qu'**un dispositif de support de boissons (19) peut être pivoté dans la région de l'espace de rangement (3).

5. Compartiment de rangement selon la revendication 4 en association avec la revendication 2, **caractérisé en ce que** le dispositif de support de boissons (19) est réalisé sous forme de fourche ou sous forme annulaire et son axe de pivotement (20) est monté au-dessus de l'axe de pivotement (21) de la paroi de séparation de manière à s'étendre horizontalement au niveau d'une paroi arrière (8) du compartiment de rangement, et le dispositif de support de boissons (19) peut être pivoté depuis une position de non-utilisation pivotée vers le haut contre la paroi arrière (8) du compartiment de rangement dans une position d'utilisation horizontale dans l'espace de rangement supérieur (3).

6. Compartiment de rangement selon la revendication 5, **caractérisé en ce que**, dans les positions de non-utilisation, la paroi de séparation (16) est pivotée sur le dispositif de support de boissons (19).

7. Compartiment de rangement selon l'une quelconque des revendications 2 à 6, **caractérisé en ce que** la paroi de séparation (16) et/ou le dispositif de support de boissons (19) sont retenus dans la position de non-utilisation et/ou dans la position d'utilisation par des éléments d'encliquetage (22).

8. Compartiment de rangement selon l'une quelconque des revendications 1 à 7, **caractérisé en ce que** le volet d'espace de rangement supérieur (6) est articulé au niveau d'un axe de pivotement supérieur (9), du côté arrière, s'étendant horizontalement, disposé dans une région supérieure d'une paroi arrière (8) du compartiment de rangement, et peut être pivoté vers le haut, et **en ce que** le volet d'espace de rangement supérieur (6) est cintré et forme, dans la position de fermeture, une région supérieure du tableau de bord (1) tournée vers l'habitacle de conduite.

9. Compartiment de rangement selon l'une quelconque des revendications 1 à 8, **caractérisé en ce que** le volet d'espace de rangement inférieur (7) est articulé au niveau d'un axe de pivotement inférieur (10, 12), s'étendant horizontalement, disposé dans une région inférieure du compartiment de rangement (2), et peut pivoter vers le bas, et **en ce que** le volet d'espace de rangement inférieur (7) est cintré et forme une région approximativement verticale du tableau de bord (1).

10. Compartiment de rangement selon l'une quelconque des revendications 1 à 9, **caractérisé en ce que** l'espace de rangement inférieur (4) est réalisé de manière à être plus grand que l'espace de rangement supérieur (3).

11. Compartiment de rangement selon l'une quelconque des revendications 1 à 10, **caractérisé en ce qu'**en dessous de l'espace de rangement inférieur (4) est disposé un troisième espace de rangement (5), lequel est accessible par le biais d'un troisième volet d'espace de rangement associé (14) depuis l'espace de rangement inférieur (4), le troisième volet d'espace de rangement (14) étant articulé à un troisième axe de pivotement (15) disposé dans la région arrière de l'espace de rangement inférieur (4), et pouvant être pivoté vers le haut depuis une position de fermeture horizontale dans une position d'ouverture.

12. Compartiment de rangement selon la revendication 11, **caractérisé en ce que** le troisième espace de rangement est réalisé sous la forme d'une cassette d'espace de rangement plate (5), et s'étend à la fois sous l'espace de rangement inférieur (4) et également davantage dans la direction de conduite du véhicule.

13. Compartiment de rangement selon l'une quelconque des revendications 1 à 12, **caractérisé en ce que**
- dans la région du côté supérieur central du tableau de bord (1), est réalisé un creux de réception (23) avec un volet de recouvrement (24) pouvant être ouvert et fermé manuellement, lequel ouvre sur l'habitacle de conduite,
- dans le creux de réception (23) est réalisé un support d'appareil pivotant (26), l'axe de pivotement (27) étant disposé horizontalement au niveau de la paroi du creux située vers l'habitacle de conduite,
- le support d'appareil (26) et son axe de pivotement (27) sont réalisés et disposés de telle sorte qu'un appareil électronique (29) inséré dans le dispositif d'appareil, dans la position rentrée par pivotement, soit reçu dans le creux de réception (23) avec un écran d'affichage (30) tourné vers le haut, et dans la position sortie par pivotement, dépasse du bord du creux (34) avec l'écran d'affichage (30) alors approximativement vertical, et
- le volet de recouvrement (24) et le support d'appareil (26) présentent des moyens d'encliquetage (31, 32) disposés au niveau de leurs bords libres, lesquels, dans une position d'encliquetage située dans la direction de fermeture par rapport à la position complètement ouverte du volet de recouvrement (24), viennent en prise l'un dans l'autre pour une fixation en position de l'appareil électronique (29).
